# FASCICULE DE BREVET EUROPEEN

(11) **EP 2 576 435 B1**
(45) Date de publication et mention de la délivrance du brevet: **14.08.2019**
(21) Numéro de dépôt: 11743259.1
(22) Date de dépôt: 23.06.2011
(51) Int. Cl.: C01B 3/38, B01J 8/00, B01J 8/04, B01J 3/02

(54) **RÉACTEUR POUR LE REFORMAGE AUTOTHERME DE GASOIL**
REAKTOR FÜR AUTOTHERME DIESELREFORMIERUNG
REACTOR FOR THE AUTOTHERMAL REFORMING OF DIESEL

(30) Priorité: 25.05.2010 FR 1002178
(43) Date de publication de la demande: 10.04.2013
(73) Titulaire: IFP Energies nouvelles, 92500 Rueil-Malmaison (FR)
(72) Inventeur: BOYER, Christophe, 69390 Charly (FR); NASTOLL, Willi, 9007 Lyon (FR); GIROUDIERE, Fabrice, 69530 Orlienas (FR); RETHORE, Sylvain, 72290 Souligne sous Ballon (FR); CALVEZ, Jean, 44800 Saint Herblain (FR); PENNARGUEAR, Yves, 44640 Saint Jean De Boiseau (FR)
(74) Mandataire: IFP Energies nouvelles
(86) Numéro de dépôt international: PCT/FR2011/000364
(87) Numéro de publication internationale: WO 2011/148068

(56) Documents cités:
- FR-A1- 2 924 358
- US-A- 2 630 461
- US-A- 4 865 820
- US-A- 5 980 596
- US-A1- 2002 088 179
- US-A1- 2002 142 199
- US-A1- 2008 011 250
- US-B1- 6 444 179

## Description

### DOMAINE TECHNIQUE DE L'INVENTION

L'invention se situe dans le domaine de la production d'hydrogène par reformage d'une charge hydrocarbonée.

Différents procédés de reformage, déjà décrits dans l'art antérieur, sont utilisés pour la production d'hydrogène à partir d'un combustible hydrocarboné :
- l'oxydation partielle (POX pour Partial Oxydation selon la terminologie anglo-saxonne) est une réaction exothermique parfois catalysée qui produit de l'hydrogène (H₂) par réaction entre la charge hydrocarbonée et l'oxygène (O₂) :
   (dans le cas du méthane par exemple)

   CH₄ + ½ O₂ → CO + 2 H₂
- le vaporeformage (SMR pour Steam Reforming selon la terminologie anglo-saxonne) est une réaction endothermique également catalytique qui produit de l'hydrogène par réaction de la charge hydrocarbonée avec de l'eau (H₂O) :
   (dans le cas du méthane par exemple)

   CH₄ + H₂O → CO + 3 H₂
- le reformage autotherme (ATR pour Autothermal Reforming selon la terminologie anglo-saxonne) est le couplage de la réaction d'oxydation partielle et du vaporeformage :
   (dans le cas du méthane par exemple)

   2 CH₄ + ½ O₂ + H₂O → 2 CO + 5 H₂

L'exothermicité de l'oxydation partielle compensant l'endothermicité du vaporeformage, un reformeur autotherme peut être adiabatique, pertes thermiques mises à part. Ce mode opératoire est donc important pour la gestion de l'énergie. En sortie d'une unité de reformage, le gaz effluent riche en hydrogène contient beaucoup d'impuretés, en particulier du monoxyde de carbone (CO). Celui-ci est particulièrement gênant car il empoisonne le catalyseur des piles à combustible. C'est pour cela qu'une unité de séparation et de purification est généralement installée pour extraire l'hydrogène pur.

Classiquement, les procédés de production d'hydrogène par reformage d'une charge hydrocarbonée sont mis en oeuvre à une pression comprise entre 1 et 40 bars. Pour mémoire, 1 bar équivaut à 100 kPa. En effet, la réaction de reformage a un meilleur rendement à ces pressions.

Cependant, dans certaines situations, il est nécessaire de faire fonctionner une installation de reformage à plus haute pression. C'est le cas par exemple lorsque l'installation est mise en oeuvre dans un environnement confiné. Il peut s'agir de véhicules se déplaçant sous l'eau, mais aussi de véhicules spatiaux, ou de véhicules dédiés aux situations d'urgence dans des environnements dangereux, par exemple dans des mines.

En outre, les installations mises en oeuvre dans un environnement confiné sont généralement privées d'air. Le procédé de production d'hydrogène doit donc être anaérobie, c'est-à-dire qu'il doit être capable de fonctionner en l'absence d'air. Le procédé est donc conçu de manière à fonctionner avec une source d'oxygène pur. L'oxygène pur est coûteux à produire, il doit être économisé au maximum.

Ces contraintes doivent être prises en compte dans la conception de l'ensemble du système de production d'hydrogène, mais plus particulièrement dans la conception du réacteur de reformage lui-même.

Dans le cadre de la mise en oeuvre de la réaction de reformage autotherme catalytique d'une charge hydrocarbonée, les fonctions suivantes sont à réaliser avant l'entrée dans la zone catalytique du réacteur où a lieu la réaction :
- la vaporisation de la charge hydrocarbonée si celle-ci est liquide ;
- le mélange efficace des composés de la réaction, c'est-à-dire de la charge hydrocarbonée, de l'oxydant et de la vapeur ;
- la distribution des flux du mélange de façon homogène sur toute la section de la zone catalytique du réacteur.

Il est en général préférable d'effectuer ces trois fonctions dans l'enceinte du réacteur de façon à limiter les pertes thermiques et à gagner en compacité.

Les actions de mélange et de distribution doivent être effectuées dans un temps limité pour éviter que la réaction de combustion ne démarre trop tôt à l'amont de la zone catalytique. Si le mélange charge/oxydant/vapeur est soumis à une trop haute température trop longtemps, il peut se produire un phénomène d'auto-inflammation et de précombustion de la charge hydrocarbonée en amont de la zone catalytique du réacteur de reformage autotherme. La charge hydrocarbonée peut se décomposer ou se transformer pour former des produits plus lourds que l'on ne pourra plus reformer en hydrogène. Le rendement en hydrogène est dégradé ; des suies sont formées ce qui entraîne également des risques de bouchage du lit catalytique.

Ce phénomène, bien connu de l'homme du métier, est amplifié ici par la pression élevée à l'intérieur du réacteur, c'est-à-dire comprise entre 40 et 70 bars, et éventuellement par le fait que le flux oxydant utilisé est de l'oxygène pur, et non pas de l'air. A haute pression et en présence d'oxygène pur, l'auto-inflammation est facilitée.

Le problème à résoudre est d'effectuer le mélange des réactifs (charge hydrocarbonée, oxygène pur et vapeur d'eau) et leur distribution en un temps de séjour très court pour rester inférieur au délai d'auto-inflammation, lui-même très court, c'est-à-dire inférieur à 100 ms, voire inférieur à 10 ms. Ces temps très courts ne permettent pas l'utilisation de systèmes conventionnels pour le mélange et la distribution des réactifs.

### ART ANTÉRIEUR

Les moyens classiques pour mélanger et distribuer des flux réactifs consistent à utiliser des systèmes de mélangeur en ligne pour mélanger les différents réactifs et ensuite à utiliser un système de distributeur pour répartir de façon homogène le mélange sur toute la section du réacteur.

Les mélangeurs en ligne sont généralement composés d'obstacles disposés de façon structurée, ou non structurée, de façon à ce que les différents écoulements se croisent dans la conduite et dans le but d'engendrer de la turbulence et des recirculations locales pour avoir un bon mélange à l'échelle locale.

Les systèmes de distribution pour les écoulements monophasiques sont généralement composés de systèmes engendrant une perte de charge importante en entrée de réacteur (grilles, plaque perforée...). En écoulement multiphasique, les systèmes sont généralement composés de tubes pour le passage de la phase gaz, et d'orifices ou de fentes pour le passage du liquide situés sur la plaque supportant ces tubes ou situés le long des tubes.

Les brevets US 4 865 820, US 2002/0142199 et US 4 166 834 décrivent des modes d'injection et de mélange de réactifs gazeux et de distribution du mélange obtenu en entrée de réacteur sans préciser si ces systèmes sont adaptés pour contrôler de très faibles temps de séjour du mélange en amont de la zone catalytique. Selon ces systèmes, il est possible d'effectuer les opérations de mélange et de distribution en amont de la zone catalytique, ce qu'il n'est pas toujours possible de faire lorsque les temps de séjour maximum sont très faibles.

Le document US 2008/0011250 décrit une chambre de mélange pour un réacteur de reformage dans laquelle le liquide est introduit au moyen d'un injecteur, ou buse (« nozzle »), la vapeur d'eau est introduite dans une première section de la chambre de mélange, et l'agent oxydant est introduit dans une seconde section de ladite chambre. Il n'est fait mention dans ce document d'aucune injection tangentielle de la vapeur d'eau, ni d'aucun mouvement de « swirl ».

Le document US 5 980 596 décrit aussi un procédé de reformage autotherme avec un réacteur comprenant un réseau multipoints d'injecteurs.

### Résumé de l'invention

La présente invention concerne un procédé de reformage autotherme d'une charge hydrocarbonée dans un réacteur de reformage catalytique à une pression comprise entre 40 et 70 bars, comprenant les étapes consistant à :
a) mélanger la charge hydrocarbonée et de la vapeur d'eau, et vaporiser la charge hydrocarbonée si elle ne l'est pas déjà, ladite charge étant injectée en entrée du réacteur sous la forme d'un jet de gouttelettes suivant l'axe du réacteur au moyen d'une buse unique, et la vapeur d'eau étant injectée tangentiellement à la paroi du réacteur dans la partie supérieure cylindrique de la chambre de mélange par la conduite, les vitesses au niveau de l'injection de vapeur étant comprises entre 5 et 20 m/s de manière à créer un mouvement de « swirl » à l'intérieur de la chambre de mélange dans une zone de diamètre compris entre 0,5 et 0,8 fois le diamètre du réacteur, un conduit divergent étant disposé pour raccorder la zone d'écoulement où s'effectue l'écoulement en «swirl» et le reste du réacteur ;
a') distribuer de façon homogène le mélange obtenu à l'étape (a) sur la section du réacteur de reformage avant d'être pré-distribué suivant l'étape (b), au moyen d'un garnissage,
b) pré-distribuer le mélange vaporisé charge hydrocarbonée/eau sur la section du réacteur de reformage à l'aide d'un réseau multipoints d'injecteurs, la densité des injecteurs du réseau étant comprise entre 300 et 2000 injecteurs par mètre carré, et un injecteur étant constitué d'un tube droit orienté selon l'axe du réacteur, traversant la chambre d'injection et possédant une extrémité supérieure située dans la chambre de mélange, une section convergente, des orifices et une extrémité inférieure, la portion de tube droit comprise entre les orifices et l'extrémité étant cylindrique et de même diamètre que le col du convergent, et le rapport de la surface de l'intérieur des injecteurs sur la surface totale du réacteur, pris au niveau de la section du réacteur correspondant à l'extrémité supérieure des injecteurs, étant compris entre 1% et 20%, le mélange pré-distribué obtenu à l'étape (b) circulant dans le tube concentrique ;
c) injecter un flux oxydant gazeux, de préférence de l'oxygène pur, à l'intérieur des tubes par l'intermédiaire d'une conduite dans le mélange pré-distribué de l'étape (b) au moyen des orifices, le flux de gaz oxydant d'une part et de mélange vaporisé charge hydrocarbonée/eau d'autre part, se mélangeant au niveau de la portion de tube droit comprise entre les orifices et l'extrémité inférieure, ;
d) distribuer, en présence d'un catalyseur de reformage autotherme, le mélange obtenu à l'étape (c) de manière homogène sur la section du réacteur de reformage au moyen d'un garnissage ;
e) reformer le mélange distribué à l'étape (d) dans la zone catalytique du réacteur de reformage, ladite zone catalytique étant constituée de monolithes catalytiques, préférentiellement de plusieurs tronçons de monolithes catalytiques superposés les uns sur les autres, les espaces entre les tronçons étant de préférence comprises entre 2 et 10 mm,
   procédé de reformage caractérisé en ce que toutes les étapes citées précédemment sont réalisées à l'intérieur de l'enceinte du réacteur de reformage qui comprend:
   - une cloison extérieure résistant aux hautes différences de pression comprises entre 40 et 70 bars, et
   - une cloison intérieure résistant aux températures comprises entre 700 et 1000 °C,
   l'espace entre les deux cloisons définissant ainsi autour de la zone catalytique du réacteur une enveloppe remplie de vapeur d'eau à une pression comprise entre 40 et 70 bars et à une température comprise entre 100 et 300 °C.

### DESCRIPTION SOMMAIRE DES FIGURES

La figure 1 est un schéma représentant une variante A ne faisant pas partie de l'invention et une variante B des injecteurs mis en oeuvre dans le procédé de reformage selon l'invention.
La figure 2 est un schéma représentant une variante préférée de réalisation du procédé selon l'invention.
La figure 3 est un graphe représentant les temps de séjour, en seconde, des gouttelettes de gazole en sortie de la buse d'injection, selon l'exemple.
La figure 4 est un graphe représentant les concentrations en gazole dans l'écoulement dans certaines parties du réacteur, selon l'exemple.

### DESCRIPTION DETAILLEE

L'invention est adaptée au reformage autotherme de charges hydrocarbonées. La charge hydrocarbonée selon l'invention peut être liquide ou gazeuse. Il peut s'agir d'hydrocarbures, de coupes pétrolières ou d'alcool, comme le méthanol, l'éthanol ou le bioéthanol, ou enfin des mélanges de ceux-ci. De préférence, la charge hydrocarbonée reformée dans le procédé selon l'invention est choisie parmi des coupes pétrolières, plus préférentiellement parmi les coupes gasoil, et encore plus préférentiellement parmi les gasoils légers ou issus du procédé Fischer-Tropsch.

La réaction de reformage mise en oeuvre dans le procédé selon la présente invention est autotherme. Les réactifs nécessaires à la réaction sont donc la charge hydrocarbonée, un oxydant et de l'eau.

Certaines charges hydrocarbonées peuvent contenir des composés soufrés ou des composés odorants ajoutés intentionnellement pour des raisons de sécurité ou des raisons légales. Ceux-ci peuvent détériorer les catalyseurs présents dans l'installation. Il est donc d'usage pour l'homme du métier de purifier la charge hydrocarbonée avant son utilisation, en utilisant par exemple une unité de purification. Le procédé selon l'invention peut donc comprendre une étape supplémentaire, précédant l'étape (a) qui consiste en la purification, en particulier en la désulfuration, de la charge hydrocarbonée.

L'étape (a) du procédé selon l'invention consiste à mélanger la charge hydrocarbonée et de la vapeur d'eau, et vaporiser la charge hydrocarbonée si elle ne l'est pas déjà.

L'étape (a) est réalisée dans une chambre de mélange. Celle-ci est située dans la partie supérieure du réacteur de reformage.

Le procédé de reformage selon l'invention fonctionne à une pression élevée, c'est-à-dire à une pression comprise entre 40 et 70 bars, de façon préférée entre 45 et 60 bars, de façon plus préférée entre 50 et 60 bars. A cette pression, la température de saturation de l'eau est comprise entre 250 et 280 °C.

Le procédé selon l'invention peut comprendre une étape supplémentaire, précédant l'étape (a) qui consiste en le chauffage de la charge hydrocarbonée jusqu'à une température comprise entre 200 et 300 °C. On évite cependant des températures d'entrée plus élevées pour limiter les réactions de craquage thermique ou de pyrolyse de la charge hydrocarbonée. Selon la charge hydrocarbonée choisie, celle-ci peut être sous forme liquide ou sous forme vapeur.

Le procédé selon l'invention peut aussi comprendre une étape supplémentaire, précédant l'étape (a) qui consiste en le chauffage de l'eau jusqu'à une température comprise entre 400 °C et 600 °C, plus préférentiellement entre 450 °C et 550 °C. A la pression du procédé, comprise entre 40 et 70 bars, l'eau est donc de préférence sous forme de vapeur surchauffée avant son entrée dans le réacteur de reformage. Cela permet une vaporisation totale de la charge hydrocarbonée sans phénomène de re-condensation.

Si la charge hydrocarbonée n'est pas totalement vaporisée à son entrée dans le réacteur de reformage, la vaporisation sera réalisée durant l'étape (a) du procédé selon l'invention.

Selon la présente invention, la charge hydrocarbonée est injectée lors de l'étape (a) en entrée du réacteur sous la forme d'un jet de gouttelettes suivant l'axe du réacteur. L'injection de la charge hydrocarbonée est réalisée au moyen d'une buse unique. Ce type de buse est bien connu de l'homme de l'art. L'énergie de l'écoulement liquide sous pression est mise à profit pour favoriser sa pulvérisation au travers d'un canal capillaire. Selon cette variante de l'invention, un jet de gouttelettes est ainsi créé et dispersé suivant un cône plein ou creux. Le diamètre de ce cône, au niveau du trajet maximal des gouttelettes avant leur vaporisation, est de préférence inférieur au diamètre minimum de la chambre de mélange du réacteur où se forme ledit cône. En outre, la taille des gouttelettes est de préférence comprise entre 10 µm (micromètre) et 1 mm et préférentiellement entre 10 et 200 µm (micromètre). L'homme du métier sait mettre en oeuvre ce type de buse pour parvenir au diamètre du cône et à la taille des gouttelettes voulus.

La vapeur d'eau utilisée à l'étape (a) est injectée tangentiellement à la paroi du réacteur. Les vitesses au niveau de l'injection de vapeur sont comprises entre 5 et 20 m/s. Le procédé selon l'invention permet de créer à l'intérieur de la chambre de mélange un mouvement de tourbillon longitudinal (appelé « swirl » en anglais) de l'écoulement de vapeur. Ce mouvement contribue à favoriser le contact et l'échange thermique entre la vapeur et la charge hydrocarbonée, qui entre de préférence sous forme d'un cône de gouttelettes selon l'axe du réacteur, et contribue également au mélange entre la vapeur et la charge hydrocarbonée vaporisée à l'échelle de la section du réacteur. L'écoulement de swirl est créé, à l'intérieur de la chambre de mélange, dans une zone de diamètre plus faible que le diamètre du réacteur, entre 0,5 et 0,8 fois le diamètre du réacteur, de façon à accélérer l'écoulement. Un conduit divergent est disposé pour raccorder la zone cylindrique où s'effectue l'écoulement en swirl et le reste du réacteur.

Le mélange obtenu à l'étape (a) du procédé selon la présente invention est distribué de façon homogène sur la section du réacteur de reformage avant d'être pré-distribué suivant l'étape (b). Cette distribution homogène du mélange obtenu à l'étape (a) est assuré par le passage à travers un garnissage, par exemple de type structuré ou vrac. Ledit garnissage est par exemple disposé en sortie de la chambre de mélange. Il permet de distribuer le mélange eau / charge hydrocarbonée sur toute la section du réacteur. En outre, un écoulement en swirl étant mis en oeuvre, le garnissage permet de rompre le vortex créé par l'écoulement et d'orienter les vitesses d'écoulement majoritairement suivant l'axe du réacteur. Enfin, le garnissage permet d'augmenter le contact entre l'eau et la charge hydrocarbonée non vaporisée qui s'écoulera sous forme de films liquides, et ainsi de compléter leur vaporisation si nécessaire.

L'étape (b) du procédé de reformage selon la présente invention consiste à pré-distribuer le mélange vaporisé charge hydrocarbonée/eau sur la section du réacteur de reformage à l'aide d'un réseau multipoints d'injecteurs.

La densité des injecteurs du réseau multipoints de l'étape (b) est comprise entre 300 et 2000 injecteurs par mètre carré.

De préférence, les injecteurs ont une section sphérique, et leur diamètre interne est compris de préférence entre 2 et 50 mm, plus préférentiellement entre 2 et 20 mm, encore plus préférentiellement entre 2 et 10 mm. Considérant la section du réacteur située au niveau de l'extrémité supérieure des injecteurs, le rapport de la surface de l'intérieur des injecteurs sur la surface totale du réacteur est comprise entre 1 % et 20 %. L'étape (c) du procédé selon la présente invention consiste à injecter un flux oxydant gazeux dans le mélange pré-distribué de l'étape (b) au niveau des injecteurs de l'étape (b).

L'oxydant selon la présente invention peut être de l'oxygène pur, de l'air, ou de l'air enrichi en oxygène. Au sens de la présente invention, on entend par « flux d'oxygène pur » un flux contenant au moins 95 % volumique d'oxygène, de préférence un pourcentage volumique d'oxygène compris entre 98 et 100 %, de préférence compris entre 99 et 100 %. De façon préférée, l'oxydant utilisé dans la présente invention est de l'oxygène pur.

Le procédé selon l'invention peut comprendre une étape supplémentaire, précédant l'étape (c) qui consiste en le chauffage de l'oxydant jusqu'à une température comprise entre 250 et 300 °C.

Les injecteurs selon la présente invention remplissent deux fonctions : D'une part, ils servent à pré-distribuer de façon ponctuelle le mélange eau/charge hydrocarbonée, et d'autre part, ils permettent l'injection très rapide de l'oxydant dans ce mélange.

De préférence, le flux oxydant est injecté latéralement dans une chambre injection, qui est traversée par les injecteurs.

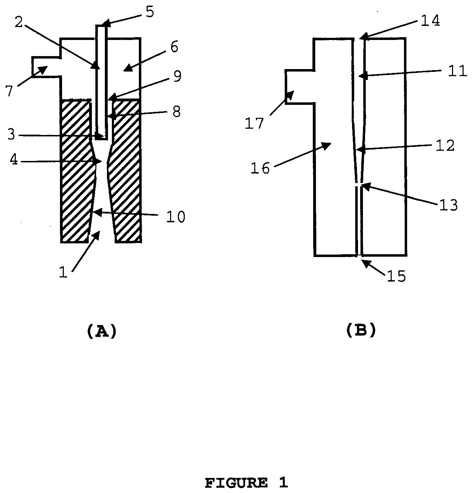

Selon une variante ne faisant pas partie de l'invention, les injecteurs peuvent consister, chacun, en un tube Venturi orienté selon l'axe du réacteur et en un tube concentrique, intérieur au tube Venturi, dont l'extrémité inférieure se situe au niveau du col du Venturi, le mélange pré-distribué obtenu à l'étape (b) circulant dans le tube concentrique et le flux oxydant étant injecté latéralement dans un volume annulaire situé entre un tube Venturi et le tube concentrique et les flux se mélangeant au niveau du col du Venturi. Cette variante des injecteurs est représentée sur la figure 1(A).

Sur la figure **1(A)****,** l'injecteur est constitué d'un tube Venturi **1** et d'un tube concentrique droit **2,** qui est situé à l'intérieur du tube Venturi **1.** L'extrémité inférieure **3** du tube concentrique **2** se trouve au niveau du col du Venturi **4.** C'est au niveau du col du Venturi **4** que la vitesse d'écoulement des flux est la plus rapide. L'extrémité supérieure **5** du tube concentrique **2** est située dans la chambre de mélange. Ainsi, le mélange eau/charge hydrocarbonée est pré-distribué en autant de points qu'il y a d'injecteurs. Le mélange ainsi pré-distribué entre dans le tube concentrique **2** par son extrémité supérieure **5,** et circule dans le tube concentrique **2** jusqu'à son extrémité inférieure **3,** située au niveau du col du Venturi **4.** Le flux oxydant est injecté latéralement dans la chambre d'injection **6,** via la conduite **7** qui traverse la paroi du réacteur. L'extrémité supérieure **9** du tube Venturi **1** communique avec la chambre d'injection **6.** Le flux oxydant se retrouve donc dans un volume annulaire **8** situé entre le tube Venturi **1** et le tube concentrique **2.** Le flux oxydant et le mélange eau/charge hydrocarbonée pré-distribué se mélangent au niveau du col du Venturi **4.** En sortie du col du Venturi **4,** un divergent **10** permet d'améliorer le mélange et d'augmenter sa surface de distribution.

Selon la variante mise en oeuvre dans le procédé de reformage selon l'invention, les injecteurs consistent, chacun, en un tube droit orienté selon l'axe du réacteur possédant des orifices, et une section convergente, le mélange pré-distribué obtenu à l'étape (b) circulant dans ledit tube et le flux oxydant étant injecté latéralement par lesdits orifices. Cette variante des injecteurs est représentée sur la figure **1(B)****.**

Sur la figure **1(B)****,** l'injecteur est constitué d'un tube droit **11,** orienté selon l'axe du réacteur, qui possède une section convergente **12,** et un ou plusieurs orifices **13.** L'extrémité supérieure **14** du tube droit **11** est située dans la chambre de mélange. Ainsi, le mélange eau/charge hydrocarbonée est pré-distribué en autant de points qu'il y a d'injecteurs. Le mélange ainsi pré-distribué entre dans le tube droit **11** par son extrémité supérieure **14,** et circule dans le tube droit **11** jusqu'à la section où sont situées le ou les orifices **13,** puis jusqu'à son extrémité inférieure **15.** Le flux oxydant est injecté latéralement dans la chambre d'injection **15,** via la conduite **17** qui traverse la paroi du réacteur. Le mélange du flux oxydant avec le mélange eau/charge hydrocarbonée pré-distribué s'effectue par cisaillement entre l'écoulement axial du mélange eau/charge hydrocarbonée et l'écoulement latéral du flux oxydant du ou des orifices **13.** Pour maximiser l'énergie turbulente au niveau de la zone de cisaillement, le où les orifices sont situés au niveau du col du convergent **12.** Entre le ou les orifices **13** et l'extrémité inférieure **15** du tube droit **11,** le tube est cylindrique de la même section que le col du convergent, de façon à minimiser le temps de séjour, ainsi que les distances de diffusion radiale de l'écoulement pour favoriser le mélange. Il pourra éventuellement être muni d'une section divergente d'angle maximum 15° lorsque le temps de séjour le permet (variante non représentée). Le divergent permet, s'il est présent, d'améliorer le mélange et d'augmenter sa surface de distribution. Le tube droit étant cylindrique entre le ou les orifices **13** et l'extrémité inférieure **15,** le diamètre et la longueur de ce cylindre sont déterminés par l'homme du métier de façon à trouver un compromis entre une bonne efficacité de mélange et un temps de séjour court.

En outre, selon l'une ou l'autre des variantes des injecteurs, un dispositif créant de la perte de charge peut être mis en oeuvre sur les injecteurs, afin d'éviter la remontée du mélange dans le flux oxydant. Ce dispositif peut être, par exemple, un diaphragme ou un matériau poreux compatible avec les fluides en jeu.

Quel que soit le type d'injecteur choisi, il est possible que l'extrémité inférieure des injecteurs comprenne un divergent. Cependant, considérant la section du réacteur située au niveau de l'extrémité inférieure du divergent, le rapport de la surface de l'intérieur des divergents sur la surface totale du réacteur est de préférence inférieure à 50 %, plus préférentiellement comprise entre 5 % et 50 %, encore plus préférentiellement comprise entre 10 % et 50 %.

L'étape (d) du procédé selon la présente invention consiste à distribuer, en présence d'un catalyseur de reformage autotherme, le mélange obtenu dans l'étape (c) de manière homogène sur la section du réacteur de reformage. En effet, les contraintes pesant sur les temps de séjour des réactifs après leur mélange effectué à l'étape (c) ne permettent pas d'avoir des injecteurs très proches les uns des autres et couvrant une large fraction de la section du réacteur. Pour garantir une bonne distribution du mélange réactif sur la totalité de la surface du réacteur, il est nécessaire de diffuser radialement le jet issu des injecteurs. Cette étape (d) de distribution est mise en oeuvre dans une zone de distribution.

L'étape de distribution (d) est réalisée en présence d'un catalyseur de reformage autotherme, ce qui permet à la réaction de reformage de débuter. De cette manière, les risques d'auto-inflammation du mélange sont limités et, en cas d'inflammation, le front de flamme est limité dans sa propagation du fait de la présence d'un dispositif de distribution dont le diamètres hydraulique des passages fluides est très petit, de façon préférentielle inférieur à 2 mm, de façon encore plus préférentielle inférieur à 1 mm. En outre, la présence d'un catalyseur de reformage autotherme dans la zone de distribution mise en oeuvre à l'étape (d) permet d'éviter que seule la réaction d'oxydation se déroule, ce qui aurait pour conséquence la formation de suies.

La diffusion du mélange obtenu dans l'étape (c) au cours de l'étape (d) peut être réalisée par tout dispositif connu de l'homme du métier adapté aux fluides en jeu.

La distribution homogène au cours de l'étape (d) du mélange obtenu à l'issue de l'étape (c) est assurée par le passage à travers un garnissage, par exemple de type structuré ou vrac pouvant contenir au moins un catalyseur de reformage.

Selon variante du procédé selon l'invention, la distribution homogène au cours de l'étape (d) du mélange obtenu à l'issue de l'étape (c) est assurée par le passage à travers des tranches successives de monolithes catalytiques espacées de hauteurs libres. Par « hauteur libre », on entend une zone ne contenant pas de garnissage et de hauteur de préférence comprise entre 2 et 10 mm, et de manière plus préférée comprise entre 2 et 5 mm.

Selon une variante du procédé selon l'invention, la distribution homogène au cours de l'étape (d) du mélange obtenu à l'issue de l'étape (c) est assurée par le passage à travers un garnissage composé de mousses métalliques ou céramiques pouvant contenir au moins un catalyseur de reformage. Le diamètre des pores de ces mousses est en général inférieur à 1 mm, de façon préférentielle inférieur à 0,5 mm. Dans ce cas, la diffusion radiale s'effectue directement au sein de la mousse au travers des pores et il n'est pas utile de prévoir une succession de garnissages espacés de hauteurs libres.

L'étape (e) du procédé selon la présente invention consiste à reformer le mélange distribué à l'étape (d) dans la zone catalytique du réacteur de reformage.

La zone catalytique du réacteur de reformage autotherme contient un ou plusieurs catalyseurs convenablement choisis par l'homme du métier. Par exemple, des catalyseurs de reformage autotherme sont commercialisés par la société SüdChemie (monolith FCR-14) ou la société Engelhard (Selectra ATR catalyst).

La zone catalytique du réacteur de reformage est constituée de monolithes catalytiques. Celles-ci présentent l'avantage de générer une perte de charge faible. Eventuellement, plusieurs tronçons de monolithes catalytiques sont superposés les uns sur les autres, les espaces entre les tronçons ayant une plus grande dimension de préférence comprise entre 2 et 10 mm. Lesdits espaces peuvent être remplis d'un garnissage de type lit granulaire vrac de catalyseur ou d'une mousse métallique ou céramique enduite de catalyseur. Ils permettent ainsi de favoriser la diffusion radiale de l'écoulement entre les tronçons de monolithes, pour maintenir une bonne homogénéité des écoulements.

Le reformat obtenu après le passage sur la zone catalytique peut être amené sur un filtre à particules, servant à récupérer les suies générées par la réaction de reformage.

De préférence, le procédé selon l'invention comprend une étape supplémentaire consistant en ce que le gaz reformé issu de l'étape (e) est refroidi en aval de la zone catalytique à l'intérieur de l'enceinte du réacteur. Un mode de réalisation de cette étape consiste à disposer un système de refroidissement du gaz reformé issu de l'étape (e) en aval de la zone catalytique à l'intérieur de l'enceinte du réacteur. Ce système de refroidissement permet d'évacuer le gaz reformé issu de l'étape (e) à une température inférieure à 500 °C. Ainsi, les problèmes de résistance mécanique de l'enceinte et des tuyauteries disposées à l'aval de la zone catalytique sont évités. Avantageusement, l'énergie récupérée dans le refroidissement du gaz reformé est utilisée pour générer et/ou surchauffer l'eau, nécessaire au procédé, qui est mélangée à la charge hydrocarbonée durant l'étape (a) du procédé selon la présente invention.

Le système de refroidissement du gaz reformé issu de l'étape (e) peut être constitué d'un serpentin en contact avec ledit gaz reformé, ledit serpentin pouvant être à la fois disposé en aval et/ou en périphérie de la zone catalytique du réacteur.

Enfin, le procédé selon l'invention se caractérise par le fait que toutes les étapes citées précédemment sont réalisées à l'intérieur de l'enceinte du réacteur de reformage.

Pour cela, l'enceinte du réacteur de reformage, à l'intérieur duquel toutes les étapes citées précédemment sont réalisée, comprend :
- une cloison extérieure résistant aux hautes différences de pression comprises entre 40 et 70 bars, et
- une cloison intérieure résistant aux températures comprises entre 700 et 1000 °C,
l'espace entre les deux cloisons définissant ainsi autour de la zone catalytique du réacteur une enveloppe de gaz inerte à une pression comprise entre 40 et 70 bars et à une température comprise entre 100 et 300 °C.

Ce type d'enceinte à double parois a déjà été décrit dans la demande de brevet FR 2924358 A1. Il permet de découpler les contraintes de températures et les contraintes de pression qui s'exercent sur le réacteur. Grâce à ce découplage des contraintes, la cloison extérieure peut être réalisée dans un matériau résistant aux hautes différences de pression, mais pas aux hautes températures, et la cloison intérieure peut être réalisée en un matériau résistant aux hautes températures du procédé, mais ne supportant qu'une faible différence de pression. L'espace entre les deux cloisons peut être mis à profit pour jouer le rôle de barrière thermique, notamment en étant rempli d'un gaz inerte.

### VARIANTE PREFEREE DE REALISATION DE L'INVENTION

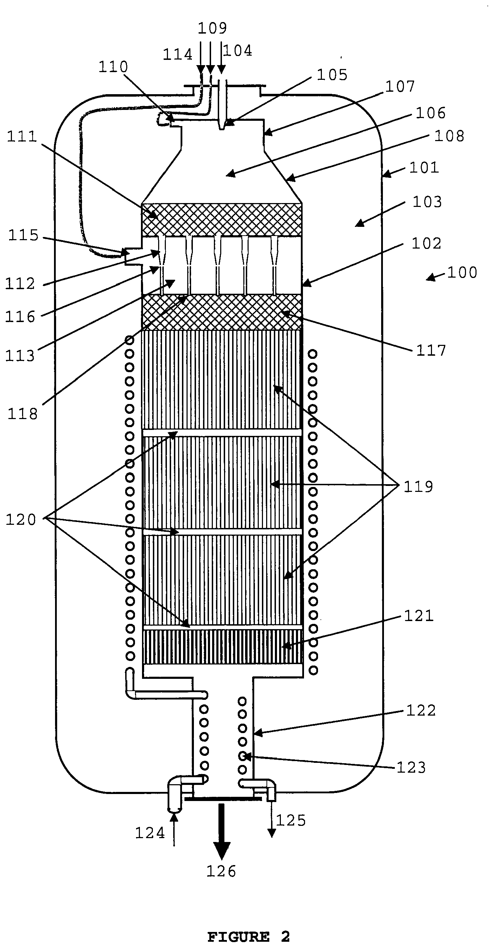

La figure 2 représente une variante préférée de réalisation de la présente invention.

Le réacteur de reformage autotherme **100** permet de mettre en oeuvre le procédé de reformage selon la présente invention. Ce réacteur comprend une enceinte formée d'une cloison extérieure **101** et de cloisons intérieure **102 et 102'.** L'espace entre les deux cloisons (101 et 102') **103** est rempli de vapeur d'eau, qui est à une pression comprise entre 40 et 70 bars et à une température comprise entre 100 et 300 °C. La cloison extérieure **101** est constituée d'un matériau résistant aux hautes différences de pression. La cloison intérieure **102** est constituée d'un matériau résistant aux hautes températures, comprises entre 700 et 1000 °C et la cloison intérieur 102' est constituée d'un matériaux résistant aux températures intermédiaires, préférentiellement comprises entre 300 et 700 °C.

La charge hydrocarbonée pénètre dans le réacteur de reformage par le conduit **104.** Une buse **105** permet de pulvériser ladite charge sous la forme d'un jet de gouttelettes. La charge hydrocarbonée pulvérisée pénètre sous la forme d'un cône dans la chambre de mélange **106.** Cette chambre présente une partie supérieure cylindrique **107** dont le diamètre est inférieur au diamètre du réacteur. Un conduit divergent **108** permet de relier la partie supérieure cylindrique **107** avec le reste du réacteur.

L'eau, sous forme de vapeur surchauffée à une température comprise entre 450 et 500 °C, pénètre dans le réacteur par le conduit **109.** L'eau est injectée tangentiellement à la paroi du réacteur dans la partie supérieure cylindrique **107** de la chambre de mélange **106** par la conduite **110.** Les vitesses au niveau de l'injection de vapeur sont comprises entre 5 et 20 m/s. Cette injection tangentielle permet de créer à l'intérieur de la partie supérieure cylindrique **107** de la chambre de mélange **106** un mouvement de tourbillon longitudinal (swirl selon la terminologie anglo-saxonne)de l'écoulement de vapeur. La combinaison de l'écoulement avec tourbillon de la vapeur et de l'écoulement sous forme conique de la charge hydrocarbonée favorise un bon mélange des réactifs dans la chambre de mélange **106.**

Le mélange vapeur/charge hydrocarbonée est distribué de façon homogène sur la totalité de la surface du réacteur grâce au garnissage **111.**

Le mélange vapeur/charge hydrocarbonée est ensuite pré-distribué en une multitude de points grâce au réseau multipoint d'injecteurs **112.** Chaque injecteur est conforme au mode de réalisation des injecteurs tel que décrit ci-avant et qui est représenté sur la figure **1(B)****.** Chaque injecteur est constitué d'un tube droit qui traverse la chambre d'injection **113.**

Le flux oxydant pénètre dans le réacteur de reformage par le conduit **114.** Il est injecté latéralement dans la chambre d'injection **113** par la conduite **115.** Le mélange du flux oxydant et du mélange eau/charge hydrocarbonée pré-distribué s'effectue par cisaillement entre l'écoulement axial du mélange eau/charge hydrocarbonée pré-distribué et l'écoulement latéral du flux oxydant au niveau des orifices **116.**

Le mélange des réactifs eau/charge hydrocarbonée/oxygène pur est amené sur un garnissage **117** permettant de distribuer le mélange des réactifs sur la totalité de la section du réacteur. Le garnissage **117** peut éventuellement comprendre un catalyseur de reformage autotherme, ce qui permet à la
échangeur supplémentaire à l'intérieur de l'équipement avant de sortir de l'enceinte sous pression.

### EXEMPLES

Un réacteur de reformage autotherme d'un gazole, gazole qui est issu d'une colonne de distillation atmosphérique d'un pétrole brut, a été dimensionné suivant les critères de cette invention, et conformément à la variante préférée de réalisation de procédé selon l'invention, telle que représentée à la figure **2****.**

Le gaz oxydant utilisé est de l'oxygène pur à 100 % qui est injecté sans dilution au niveau de la chambre **108.** Les conditions opératoires sont décrites dans le tableau 1.

**Tableau 1 : Conditions opératoires**

| | | |
|---|---|---|
| Débit masse gazole | kg/h | 7,75 |
| Température gazole | °C | 200 |
| Débit masse O₂ | kg/h | 6 |
| Température O₂ | °C | 250 |
| Débit masse H₂O | kg/h | 35 |
| Température H₂O | °C | 460 |

Une seule buse d'injection du gazole **105** est disposée en tête du réacteur et produit un spray avec des gouttelettes d'environ 100 µm (micromètre) de diamètre suivant un cône d'angle 90°. Le diamètre de la partie supérieure **107** de la chambre de mélange où est créé le swirl de vapeur est de 80 mm et le diamètre du réacteur est de 120 mm. La hauteur de la chambre de mélange **106** et du garnissage **111** sont de 70 mm. Le nombre d'injecteurs dans la chambre d'injection **113** est de 19. La géométrie des injecteurs est celle décrite à la figure **2(B)** avec un divergent en partie inférieure des tubes. Chaque injecteur a un diamètre interne de 10 mm à son extrémité supérieure, un diamètre de 3 mm au niveau de l'orifice d'injection de l'oxygène, et un diamètre de 3 mm au niveau de l'extrémité inférieure du divergent. Le temps de séjour moyen entre l'orifice **116** d'injection de l'oxygène et l'entrée dans le garnissage **117** est de 7 ms, ce qui reste inférieur au délai d'auto-inflammation théorique de 20 ms. Le garnissage **117** est composé d'une mousse métallique avec une densité de pores de 27 à 33 pores par pouce, soit environ 10 à 12 pores par centimètre, pouvant être enduit de catalyseur. La hauteur du garnissage **117** est de 100 mm.

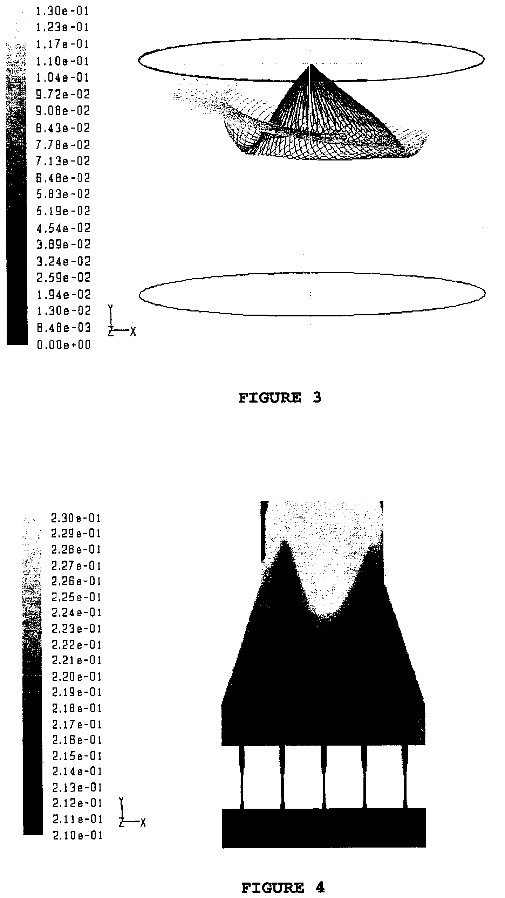

La figure 3 représente les temps de séjour, en seconde, des gouttelettes de gazole en sortie de la buse d'injection **105,** qui sont soumises à l'injection tangentielle du flux de vapeur à 460 °C. Les temps de séjour sont représentés par des niveaux de gris : le noir correspond à 0 seconde et le gris clair à 0,13 seconde. Lorsque les gouttelettes sont vaporisées, elles disparaissent de la figure 3. Ces calculs ont été effectués avec le logiciel Fluent version 6.3.26 commercialisé par la société Ansys.

Comme on peut le constater sur la figure **3****,** la chambre de mélange **106** (par référence à la figure 2) permet une vaporisation efficace du gazole, puisque les gouttelettes disparaissent avant la sortie de la partie supérieure **107** de la chambre de mélange.

La figure **4** représente les concentrations en gazole dans l'écoulement dans la chambre de mélange 106, dans le garnissage **111** (par référence à la figure 2), dans le réseau multipoint d'injecteurs **112** et dans le garnissage **117.** Le gazole est simulé par une molécule fictive ayant pour formule brute C₁₆H₂₉ ayant des propriétés physiques (densité, viscosité, température d'ébullition) représentative du gazole. Les valeurs de concentrations sont représentées en échelle de gris. Elles vont du gris clair pour une concentration supérieure ou égale à 23 % au noir pour les concentrations inférieures ou égales à 21 %. Ces champs de concentration ont également été calculés à l'aide du logiciel Fluent version 6.3.26.

On peut constater sur la figure **4** que l'efficacité du mélange est très bonne dans la chambre de mélange 106 puisque les concentrations en gazole sont homogènes en sortie de cette chambre.

En outre, les calculs ont montré que l'efficacité de distribution du système est très bonne puisque les vitesses de l'écoulement gaz sont homogènes sur toute la section ainsi que les concentrations en oxygène. Enfin, le rendement en sortie du réacteur est bon puisque on atteint des taux de conversion du gazole supérieurs à 98 %.

## Revendications

1. Procédé de reformage autotherme d'une charge hydrocarbonée dans un réacteur de reformage catalytique à une pression comprise entre 40 et 70 bars, comprenant les étapes consistant à :
a) mélanger la charge hydrocarbonée et de la vapeur d'eau, et vaporiser la charge hydrocarbonée si elle ne l'est pas déjà, ladite charge étant injectée en entrée du réacteur sous la forme d'un jet de gouttelettes suivant l'axe du réacteur au moyen d'une buse unique (105), et la vapeur d'eau étant injectée tangentiellement à la paroi du réacteur dans la partie supérieure cylindrique (107) de la chambre de mélange (106) par la conduite (110), les vitesses au niveau de l'injection de vapeur étant comprises entre 5 et 20 m/s de manière à créer un mouvement de « swirl » à l'intérieur de la chambre de mélange (106) dans une zone de diamètre compris entre 0,5 et 0,8 fois le diamètre du réacteur, un conduit divergent étant disposé pour raccorder la zone d'écoulement où s'effectue l'écoulement en «swirl» et le reste du réacteur,
a') distribuer de façon homogène le mélange obtenu à l'étape (a) sur la section du réacteur de reformage avant d'être pré-distribué suivant l'étape (b, au moyen d'un garnissage (111),
b) pré-distribuer le mélange vaporisé charge hydrocarbonée/eau sur la section du réacteur de reformage à l'aide d'un réseau multipoints d'injecteurs (112), la densité des injecteurs du réseau étant comprise entre 300 et 2000 injecteurs par mètre carré, et un injecteur (112) étant constitué d'un tube droit (11) orienté selon l'axe du réacteur, traversant la chambre d'injection (113) et possédant une extrémité supérieure (14) située dans la chambre de mélange (106), une section convergente (12), des orifices (13) et une extrémité inférieure (15), la portion de tube droit comprise entre les orifices (13) et l'extrémité (15) étant cylindrique et de même diamètre que le col du convergent (12), et le rapport de la surface de l'intérieur des injecteurs (112) sur la surface totale du réacteur, pris au niveau de la section du réacteur correspondant à l'extrémité supérieure (14) des injecteurs (112), étant compris entre 1% et 20%, le mélange pré-distribué obtenu à l'étape (b) circulant dans le tube concentrique,
c) injecter le flux oxydant gazeux, de préférence de l'oxygène pur, à l'intérieur des tubes (112) par l'intermédiaire de la conduite (17) dans le mélange pré-distribué de l'étape (b) au moyen des orifices (13), le flux de gaz oxydant d'une part et de mélange vaporisé charge hydrocarbonée/eau d'autre part, se mélangeant au niveau de la portion de tube droit comprise entre les orifices (13) et l'extrémité (15)
d) distribuer, en présence d'un catalyseur de reformage autotherme, le mélange obtenu à l'étape (c) de manière homogène sur la section du réacteur de reformage au moyen d'un garnissage (117),
e) reformer le mélange distribué à l'étape (d) dans la zone catalytique du réacteur de reformage, ladite zone catalytique étant constituée de monolithes catalytiques, préférentiellement de plusieurs tronçons de monolithes catalytiques superposés les uns sur les autres, les espaces entre les tronçons étant de préférence comprises entre 2 et 10 mm, procédé de reformage **caractérisé en ce que** toutes les étapes citées précédemment sont réalisées à l'intérieur de l'enceinte du réacteur de reformage qui comprend:
- une cloison extérieure (101) résistant aux hautes différences de pression comprises entre 40 et 70 bars, et
- une cloison intérieure (102) résistant aux températures comprises entre 700 et 1000 °C, l'espace entre les deux cloisons (101 et 102) définissant ainsi autour de la zone catalytique du réacteur une enveloppe (103) remplie de vapeur d'eau à une pression comprise entre 40 et 70 bars et à une température comprise entre 100 et 300 °C.

2. Procédé de reformage selon la revendication 1, **caractérisé en ce que** la distribution homogène au cours de l'étape (d) du mélange obtenu à l'issue de l'étape (c) est assurée par le passage à travers un garnissage (117) de type structuré ou vrac comprenant au moins un catalyseur de reformage.

3. Procédé de reformage selon la revendication 1, **caractérisé en ce que** la distribution homogène au cours de l'étape (d) du mélange obtenu à l'issue de l'étape (c) est assurée par le passage à travers un garnissage (117) composé de mousses métalliques ou céramiques pouvant être revêtues d'un catalyseur de reformage.

4. Procédé de reformage selon l'une quelconque des revendications 1 à 3, **caractérisé en ce que** le procédé comprend une étape supplémentaire consistant **en ce que** le gaz reformé issu de l'étape (e) est refroidi en aval de la zone catalytique à l'intérieur de l'enceinte du réacteur.

## Patentansprüche

1. Verfahren zur autothermen Reformierung einer Kohlenwasserstoffcharge in einem Reaktor zur katalytischen Reformierung bei einem Druck zwischen 40 und 70 bar, umfassend die folgenden Schritte, darin bestehend:
a) die Kohlenwasserstoffcharge und Wasserdampf zu mischen, die Kohlenwasserstoffcharge zu verdampfen, wenn sie dies nicht bereits ist, wobei die Charge am Eingang des Reaktors in Form eines Strahls von Tröpfchen entlang der Achse des Reaktors mit Hilfe einer einzigen Düse (105) eingespritzt wird, und wobei der Wasserdampf tangential zur Wand des Reaktors in den oberen zylindrischen Teil (107) der Mischkammer (106) durch die Leitung (110) eingespritzt wird, wobei die Geschwindigkeiten im Bereich der Dampfeinspritzung zwischen 5 und 20 m/s betragen, um eine "Swirl"-Bewegung innerhalb der Mischkammer (106) in einer Zone mit einem Durchmesser zwischen 0,5- und 0,8-mal den Durchmesser des Reaktors zu erzeugen, wobei eine divergente Leitung vorgesehen ist, um die Abflusszone, in der der "Swirl"-Abfluss erfolgt, und den Rest des Reaktors zu verbinden,
a') das in Schritt a) erhaltene Gemisch homogen auf dem Querschnitt des Reformierungsreaktors zu verteilen, bevor es in Schritt b) vorverteilt wird, mit Hilfe einer Auskleidung (111),
b) das verdampfte Gemisch Kohlenwasserstoffcharge/Wasser auf dem Querschnitt des Reformierungsreaktors mit Hilfe eines Mehrpunktnetzes von Einspritzdüsen (112) vorzuverteilen, wobei die Dichte der Einspritzdüsen auf dem Netz zwischen 300 und 2000 Einspritzdüsen pro Quadratmeter beträgt, und wobei eine Einspritzdüse (112) aus einem geraden Rohr (11) besteht, das entlang der Achse des Reaktors ausgerichtet ist und die Einspritzkammer (113) durchquert, und das ein oberes Ende (14), das sich in der Mischkammer (106) befindet, einen konvergenten Querschnitt (12), Öffnungen (13) und ein unteres Ende (15) besitzt, wobei der gerade Rohrabschnitt, der zwischen den Öffnungen (13) und dem Ende (15) angeordnet ist, zylindrisch ist und denselben Durchmesser wie der Hals des konvergenten Abschnitts (12) hat, und wobei das Verhältnis der Oberfläche des Inneren der Einspritzdüsen (112) zur Gesamtfläche des Reaktors, betrachtet im Bereich des Querschnitts des Reaktors, der dem oberen Ende (14) der Einspritzdüsen (112) entspricht, zwischen 1 % und 20 % beträgt, wobei das in Schritt b) erhaltene vorverteilte Gemisch in dem konzentrischen Rohr zirkuliert,
c) den gasförmigen Oxidationsstrom, vorzugsweise reinen Sauerstoff, in das Innere der Rohre (112) über die Leitung (17) in das vorverteilte Gemisch des Schritts b) mit Hilfe der Öffnungen (13) einzuspritzen, wobei sich der gasförmige Oxidationsstrom einerseits und das verdampfte Gemisch Kohlenwasserstoffcharge/Wasser andererseits im Bereich des geraden Rohrabschnitts, der zwischen den Öffnungen (13) und dem Ende (15) angeordnet ist, mischen,
d) im Beisein eines autothermen Reformierungskatalysators das in Schritt c) erhaltene Gemisch homogen auf dem Querschnitt des Reformierungsreaktors mit Hilfe einer Auskleidung (117) zu verteilen,
e) das in Schritt d) verteilte Gemisch in der katalytischen Zone des Reformierungsreaktors zu reformieren, wobei die katalytische Zone von katalytischen Monolithen, vorzugsweise mehreren Abschnitten von katalytischen Monolithen, die übereinander gelagert sind, gebildet ist, wobei die Räume zwischen den Abschnitten vorzugsweise zwischen 2 und 10 mm betragen,
wobei das Reformierungsverfahren **dadurch gekennzeichnet ist, dass** alle vorher zitierten Schritte innerhalb des Gefäßes des Reformierungsreaktors durchgeführt werden, umfassend:
- eine äußere Trennwand (101), die hohen Druckunterschieden zwischen 40 und 70 bar standhält, und
- eine innere Trennwand (102), die Temperaturen zwischen 700 und 1000 °C standhält, wobei der Raum zwischen den zwei Trennwänden (101 und 102) somit um die katalytische Zone des Reaktors eine Hülle (103) definiert, die mit Wasserdampf mit einem Druck zwischen 40 und 70 bar und einer Temperatur zwischen 100 und 300 °C gefüllt ist.

2. Reformierungsverfahren nach Anspruch 1, **dadurch gekennzeichnet, dass** die homogene Verteilung während des Schrittes d) des in Schritt c) erhaltenen Gemisches durch den Durchgang durch eine Auskleidung (117) strukturierten oder losen Typs, umfassend mindestens einen Reformierungskatalysator, gewährleistet wird.

3. Reformierungsverfahren nach Anspruch 1, **dadurch gekennzeichnet, dass** die homogene Verteilung während des Schrittes d) des in Schritt c) erhaltenen Gemisches durch den Durchgang durch eine Auskleidung (117) gewährleistet wird, die aus Metall- oder Keramikschaum besteht, der mit einem Reformierungskatalysator überzogen werden kann.

4. Reformierungsverfahren nach einem der Ansprüche 1 bis 3, **dadurch gekennzeichnet, dass** das Verfahren einen zusätzlichen Schritt umfasst, darin bestehend, dass das reformierte Gas aus Schritt e) stromabwärts zu der katalytischen Zone innerhalb des Reaktorgefäßes gekühlt wird.

## Claims

1. Process for autothermal reforming of a hydrocarbon feed in a catalytic reforming reactor at a pressure comprised between 40 and 70 bar, comprising the steps consisting of:
a) mixing the hydrocarbon feed and steam, and vaporizing the hydrocarbon feed if it is not already vaporized, said feed being injected at the reactor inlet in the form of a jet of droplets along the axis of the reactor by means of a single nozzle (105), and the steam being injected tangentially to the reactor wall, in the cylindrical upper portion (107) of the mixing chamber (106) via pipe (110), the velocities during steam injection being comprised between 5 and 50 m/s to create a swirling motion within the mixing chamber (106) in a zone with a diameter comprised between 0.5 and 0.8 times the diameter of the reactor, a divergent duct being arranged to connect the flowing zone where the swirling flow is produced and the rest of the reactor,
a') distributing homogeneously the mixture obtained in step (a) over the cross-section of the reforming reactor before being predistributed following step (b), by means of packing (111),
b) predistributing the hydrocarbon feed/water vaporized mixture over the cross-section of the reforming reactor by means of a multipoint network of injectors (112), the density of injectors of the network being comprised between 300 and 2000 injectors per square metre, and an injector (112) being constituted of a straight tube (11) oriented along the axis of the reactor, passing through the injection chamber (113) and comprising an upper end (14) located in the mixing chamber (106), a convergent section (12), openings (13) and a lower end (15), the fraction of the straight tube comprised between the openings (13) and the end (15) being cylindrical and having the same diameter than the neck of the convergent nozzle (12), and the ratio of the internal surface area of the injectors (112) to the total surface area of the reactor, taken at the level of the section of the reactor corresponding to the upper end (14) of the injectors (112), being comprised between 1% and 20%, the predistributed mixture obtained in step (b) circulating in the concentric tube,
c) injecting a gaseous oxidant flow, preferably of pure oxygen, inside the tubes (112) by means of a pipeline (17) into the predistributed mixture from step (b) by means of the openings (13), mixing the gaseous oxidant flow on the one hand and the hydrocarbon feed/water vaporised mixture on the other hand at the level of the fraction of the straight tube comprised between the openings (13) and the lower end (15),
d) distributing, in the presence of an autothermal reforming catalyst, the mixture obtained in step (c) homogeneously over the cross-section of the reforming reactor by means of a packing (117),
e) reforming the mixture distributed at step (d) in the catalytic zone of the reforming reactor, said catalytic zone consisting of catalytic monoliths, preferably of several segments of catalytic monoliths superposed on one another, the spaces between the segments preferably being comprised between 2 and 10 mm, the reforming process being **characterized in that** all the steps mentioned above are carried out in the vessel of the reforming reactor, which comprises:
- an outer wall (101) resistant to high pressure differences comprised between 40 and 70 bar, and
- an inner wall (102) resistant to temperatures comprised between 700 and 1000°C, the space between the two walls (101 and 102) thus defining, around the catalytic zone of the reactor, an envelope (103) filled with steam at a pressure comprised between 40 and 70 bar and at a temperature below 500°C, preferably comprised between 100 and 300°C.

2. Reforming process according to claim 1, **characterized in that** homogeneous distribution during step (d) of the mixture obtained at the end of step (c) is ensured by passage through packing (117) of the structured or bulk type comprising at least one reforming catalyst.

3. Reforming process according to claim 1, **characterized in that** homogeneous distribution during step (d) of the mixture obtained at the end of step (c) is ensured by passage through packing (117) composed of metallic or ceramic foams that can be coated with a reforming catalyst.

4. Reforming process according to any one of claims 1 to 3, **characterized in that** the process comprises an additional step wherein the reformed gas from step (e) is cooled downstream of the catalytic zone in the reactor vessel.
